# EUROPEAN PATENT APPLICATION

(11) **EP 3 591 630 A1**
(43) Date of publication of application: **08.01.2020**
(21) Application number: 18182075.4
(22) Date of filing: 05.07.2018
(51) Int. Cl.: G07F 7/08, G06Q 20/22, G06Q 20/34, G06Q 20/38

(54) **GENERAL PURPOSE RELOADABLE CARD CONSOLIDATING MULTIPLE TRANSACTION CARDS**

(71) Applicant: Ou, Chi-Yuan, 22169 New Taipei City (TW)
(72) Inventor: Ou, Chi-Yuan, 22169 New Taipei City (TW)
(74) Representative: Cabinet Chaillot

(57) **Abstract**

Disclosed is a general purpose reloadable (GPR) card that consolidates multiple transaction cards, has a unique card number and allows a user to switch among the transaction cards. The GPR card includes a transmission unit, a storage unit, payment units, a display, an operation interface, a rechargeable battery and a microprocessor. The transmission unit is connectable to a smart device to access multiple funding sources for storing on the storage unit. The funding sources are digital data of the transaction cards owned by the user. The display and the operation interface allow the user to view and select one funding source as a default funding choice and provide the same to a third party API service provider who holds a plurality of user preloaded digital data. The payment units provide the unique card number to a point of service; and the microprocessor manages all other elements of the GPR card.

## Description

### FIELD OF THE INVENTION

The present invention relates to a general purpose reloadable (GPR) card for use in financial transactions, and more particularly, to a GPR card that consolidates a user's multiple types of transaction cards into one single card and allows the user to choose any one of them for use.

### BACKGROUND OF THE INVENTION

As the 21st century proceeds, more and more credit, debt, gift and loyalty cards are used ubiquitously throughout the world. A typical user has a plurality of cards at his/her disposal. The problem is, with so many cards on hand, it is difficult to keep track of the use of these cards. Many users receive gift cards from friends and family members, and these types of cards are particularly hard to keep track of. Many of these cards only work at some preset locations. As time lapses, the gift cards are forgotten and/or lost if they were not used within a reasonably short time after acquisition.

What is clearly needed is a platform that lets a user consolidate all cards of any type into an App on a smart device or a smartphone to manage all money-related things, and allows the user to fund a single general purpose reloadable (GPR) card having a unique card number from multiple funding sources set up in advance by the user.

### SUMMARY OF THE INVENTION

A primary object of the present invention is to provide a GPR card having a unique card number, which consolidates multiple types of transaction cards owned by a user, such as credit cards, debit cards, gift cards, financial cards and loyalty cards, into the same one GPR card, and the user is allowed to freely select and switch among different funding sources for the transaction cards according to different requirements in use, such as the credit limits of cards, the areas in which the cards are to be used, and discounts available from the cards.

Another object of the present invention is to provide a GPR card, which allows a user to complete the selection and switching among different transaction cards all on the GPR card without the need of additionally using a smart device to proceed with the same operation twice, so as to simplify the process for checkout after a transaction and shorten the time for completing the transaction.

To achieve the above and other objects, the GPR card consolidating multiple transaction cards according to the present invention has a unique card number and includes at least one transmission unit, a storage unit, a display, an operation interface, a plurality of payment units, a rechargeable battery and a microprocessor.

The at least one transmission unit is connectable to a smart device to access a plurality of funding sources stored on the smart device. Each of the funding sources is a digital data of one of many different transaction cards input to the smart device by a user. In an operable embodiment of the present invention, the at least one transmission unit includes a BLE wireless Bluetooth antenna, an NFC (near-field communication) antenna for an EMV (Europay, Mastercard, Visa) chip and/or an LTE SIM (long-term-evolution subscriber identity module) card.

In addition, the storage unit stores the plurality of funding sources thereon; the display is provided on a surface of the GPR card for showing the funding sources; and the operation interface is also provided on a surface of the GPR card for a user to select one of the funding sources shown on the display.

Further, the payment units are able to transmit the unique card number to a point of service (POS). In the preferred embodiment, the payment units include a magnetic stripe, an EMV chip and an LTE SIM card or an LTE card/chip. The microprocessor is electrically connected to between the at least one transmission unit, the storage unit, the payment units, the display, the operation interface and the rechargeable battery.

Wherein the GPR card sets one of the funding sources selected by the user as a default funding choice, and provides the default funding choice to a third party API (application programming interface) service provider, so that the third party API service provider holds a plurality of digital data of different user preloaded transaction cards.

In an operable embodiment, the user is allowed to make a selection directly on the GPR card and indirectly provide the default funding choice to the third party API service provider by linking to an App installed on the smart device.

The third party API service provider sets the digital data matching the default funding choice as a default digital data and may be linked to an issuer corresponding to the default digital data to transmit a deduction request for the payment of a transaction amount.

The present invention is characterized in that the GPR card can store a plurality of funding sources thereon and allows the user to directly operate on the display and the operation interface to select one of the funding sources as the default funding choice, so that the switching among different funding sources can be independently completed on the GPR card. Therefore, the GPR card consolidating multiple transaction cards according to the present invention advantageously simplifies the checkout process and shortens the time needed for completing a transaction.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein
Fig. 1 is a structural view of a GPR card according to a preferred embodiment of the present invention;
Fig. 2 illustrates different identifiers represented by a unique card number of the GPR card of the present invention;
Fig. 3 is a systematic view showing a smart device is used to set up digital data on the GPR card of the present invention and on a system of a third-party API service provider;
Fig. 4 is a systematic view showing the use of the GPR card of the present invention to make payment for a transaction by a default funding source of the GPR card; and
Fig. 5 is a systematic view showing the use of the GPR card of the present invention to change the default funding source of the GPR card.

### DETAILED DESCRIPTION OF THE PREFERRED EMBODIMENTS

The present invention will now be described with some preferred embodiments thereof and by referring to the accompanying drawings.

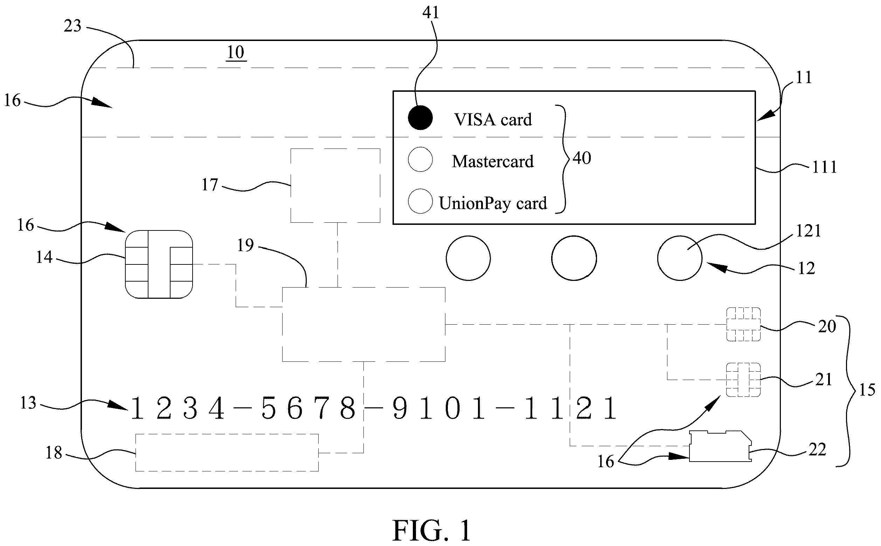

Please refer to Fig. 1, which is a structural view of a general purpose reloadable (GPR) card consolidating multiple transaction cards according to a preferred embodiment of the present invention. For the purpose of conciseness and clarity, the present invention is also briefly referred to as the GPR card and generally denoted by reference numeral 10 herein. The GPR card 10 is configured mainly for a user to consolidate a plurality of transaction cards owned by the user for easy management thereof. The GPR card 10 is provided on a front surface with a display 11, an operation interface 12, a 16-digit unique card number 13, and an EMV (Europay, Mastercard, and Visa) chip 14. As shown, the display 11 is provided as a color touchscreen 111 and has a plurality of keys 121 provided at a lower side thereof, so that the color touchscreen 111 and the keys 121 together constitute the operation interface 12. The user can directly touch the color touchscreen 111 or push the keys 121 to make a selection on the GPR card 10.

However, the above description is only illustrative and not restrictive. That is, the display 11 can be otherwise provided as a black and white screen, and the keys 121 alone constitute the operation interface 12. Or, only one single color touchscreen 111 can be provided to constitute the display 11 and the operation interface 12.

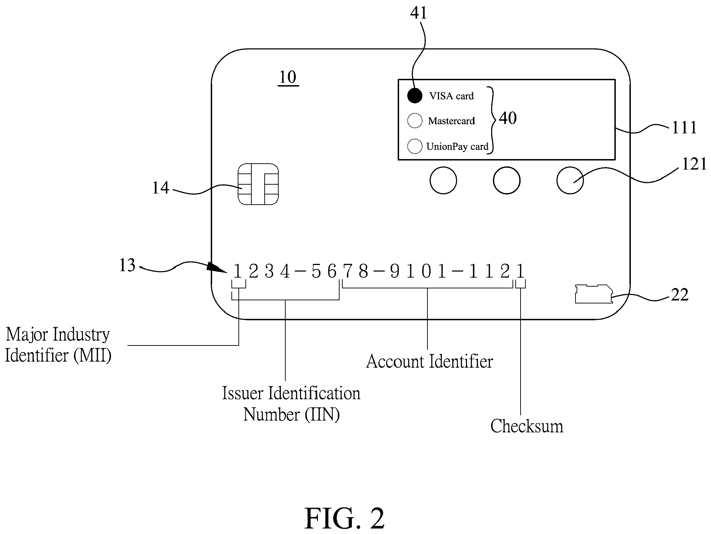

Please refer to Fig. 2. In the 16-digit unique card number 13, starting from left to right, the first digit indicates a major industry identifier (MII), the 1^{st} to the 6^{th} digits together indicate an issuer identification number (IIN) or a bank identification number (BIN), the 7^{th} to the 15^{th} digits together indicate an account identifier/number, and the 16^{th} digit indicates a checksum. From the issuer identification number (IIN) of the 16-digit unique card number 13, one can identify the issuer of the GPR card 10 and a GPR card account created by the issuer via the account identifier.

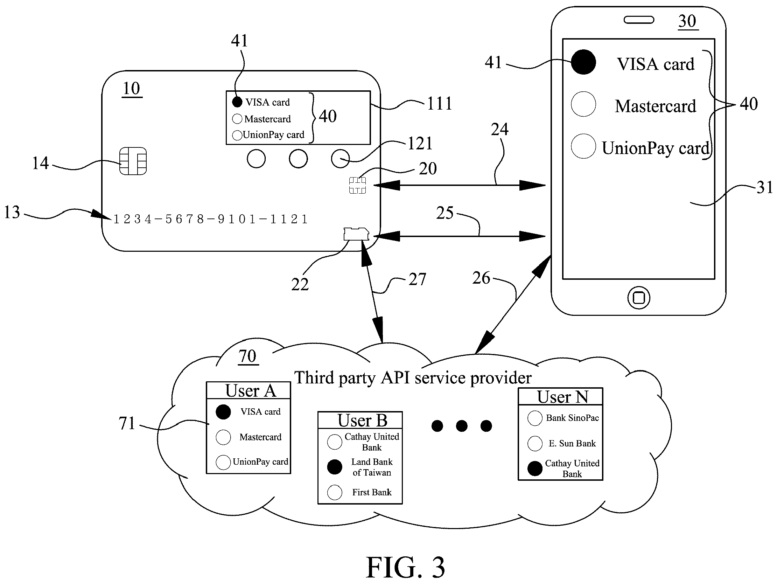

Please refer to Fig. 1 again. The GPR card 10 is internally provided with at least one transmission unit 15, a plurality of payment units 16, a storage unit 17, a rechargeable battery 18, and a microprocessor 19. As shown in Fig. 3, the at least one transmission unit 15 is connectable to a smart device 30, which can be a cell phone, a tablet computer or a computer, to access a plurality of funding sources 40 stored on the smart device 30. Each of the funding sources 40 is a digital data of one of many different transaction cards input to the smart device 30 by the user. As can be seen in Fig. 1, the at least one transmission unit 15 may include a BLE Bluetooth antenna 20, a near-field communication (NFC) antenna 21 for the EMV chip 14, and a LTE SIM card 22 (long-term-evolution subscriber identity module card) or an LTE card/chip.

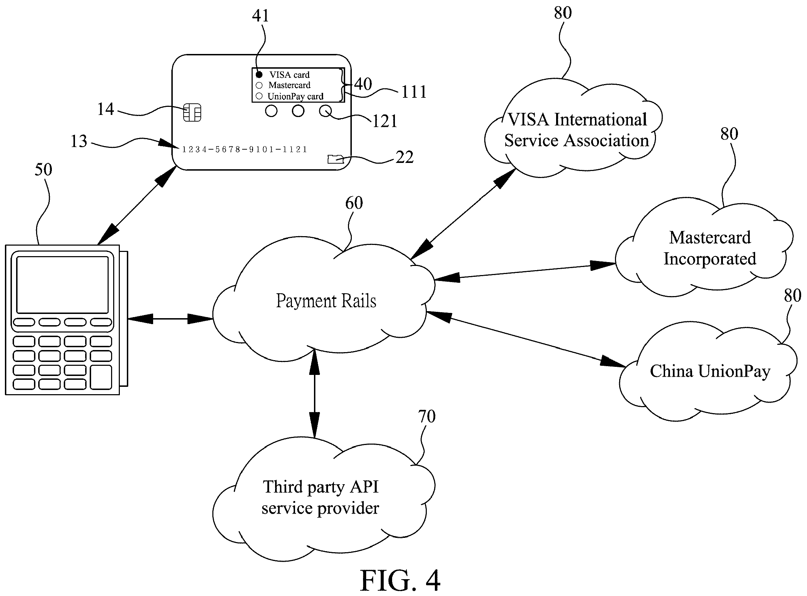

The payment units 16 are mainly used to transmit and accordingly provide the unique card number 13 of the GPR card 10 to a Point of Service (POS) 50, as shown in Fig. 4. The GPR card 10 of the present invention is configured as a card having a unique card number and provided with more than one type of payment technology. In the present invention, the payment units 16 include a magnetic stripe 23, an EMV chip 14, and an LTE SIM card 22. However, the above description is only illustrative and not intended to limit the patterns of the at least one transmission unit 15 and the payment units 16. The storage unit 17 is used to store the funding sources 40.

The rechargeable battery 18 can be any of the existing charging means being adopted by most people at the present time. For example, the rechargeable battery 18 can be recharged via a nano-solar panel inlaid into the surface of the GPR card 10, or recharged via a micro charging port provided on an outer side of the GPR card 10. Alternatively, the rechargeable battery 18 can be provided with an induction coil to enable wireless charging thereof.

The microprocessor 19 is electrically connected to between the display 11, the operation interface 12, the at least one transmission unit 15, the payment units 16, the storage unit 17 and the rechargeable battery 18 for managing message delivery among the BLE Bluetooth antenna 20, the LTE SIM card 22, the color touchscreen 111, the magnetic stripe 23, the NFC antenna 21, the EMV chip 14, the keys 121 and other related elements.

Please refer to Fig. 3. The transmission units 15 of the GPR card 10 according to the present invention are wirelessly communicable with the smart device 30 via a first link 24 or a second link 25. As shown, the first link 24 is a BLE Bluetooth communication link, and the second link 25 is an LTE SIM card communication link, which enables the GPR card 10 to communicate with the Internet, a proxy server or the cloud directly or indirectly through any one of a cellular network, a payment rail 60 and an application or App 31 residing on the smart device 30.

More specifically, the smart device 30 has a smart financial management application or App 31 loaded or installed thereon, and the App 31 on the smart device 30 is communicable with a third-party application programming interface (API) service provider 70 via a third link 26, which can be the Internet or a cellular network.

A main function of the App 31 is to enable the user to add to the GPR card 10 different funding sources 40 for various types of transaction cards owned by the user. The funding sources 40 can include the user's bank accounts, check accounts, credit card accounts or even crypto currencies.

In a preferred embodiment of the present invention, the user may manually add cards owned by him/her to the GPR card 10 by entering a 16-digit card number of the transaction card directly into the App 31. In another operable embodiment, the funding sources 40 can be automatically added into the App 31 when the user takes a picture of the transaction cards, such as a Visa card, a Mastercard and an America Express card. In a further operable embodiment, the funding sources 40 can be automatically added into the APP 31 when the user scans a barcode, which can be read with a camera built in the smart device 30 or a barcode reader.

When the user wants to use the GPR card 10 to consolidate different types of transaction cards he/she owns, the user must first activate the GPR card 10 using the 16-digit unique card number 13 either through the App 31 or a web site, by phone, simple message or email, or via any one of other known activation technologies. In the illustrated preferred embodiment, the GPR card 10 of the present invention is activated through the App 31 on the smart device 30, so that the GPR card 10 is in an energized state and ready for use.

Then, the user enters the digital data of all the transaction cards to be used as the funding sources 40 as well as the unique card number 13 of the GPR card 10 into the App 31, and presets in the App 31 one of the funding sources 40 as a default funding choice 41. Once the default funding choice 41 has been set, the user, when checks out in all future transactions using the GPR card 10, needs only to operate on the GPR card 10 to select one of the funding sources 40 according to different use requirements or standards and conveniently switches to a corresponding funding source 40 without the need of additionally resetting the funding source 40 by opening the App 31 installed on the smart device 30.

The third party API service provider 70 provides a plurality of application programming interfaces (APIs). An API is a set of subroutine definitions, protocols and tools for building application software. In general terms, it is a set of clearly defined methods of communication between various software components. An API may be for a web-based system, an operating system, a database system and a computer hardware or software library.

The third party API service provider 70 creates a GPR card account 71 for each user according to the unique card number 13 of the GPR card 10 held by the user, and all the funding sources 40 and the default funding choice 41 entered into the App 31 are correspondingly stored in the GPR card account 71, so as to form a database system that consolidates all users' all accounts. Therefore, the third party API service provider 70 holds a plurality of digital data of user preloaded transaction cards. With these arrangements, each user can have more flexibility to customize the funding sources 40 for the GPR card 10 via the third party API service provider 70.

Please refer to Fig. 4. When the user intends to buy an item and decides to make the payment using the Visa card that has been preloaded into the App 31, the user can show the GPR card 10 at a POS 50 in the store for checkout.

The GPR card 10 may use any of the following three technologies to initiate a transaction. In the first way, the GPR card 10 may be swiped to initiate the transaction via the magnetic stripe 23; in the second way, the GPR card 10 may be inserted into a card reader at a POS 50 to initiate a contact transaction via the EMV chip 14; and in the third way, the GPR card 10 may be tapped or waved near an NFC enabled POS device to initiate a contactless transaction via the NFC antenna 21.

Then, the POS 50 communicates with a payment rail 60 over a payment network via a link to look for the funding source 40. At this point, based on the information in the 16-digit card number 13 of the GPR card 10, the POS 50 is directed in the payment rail 60 to the database system of the third party API service provider 70 to look for the funding source 40. According to the default funding choice 41 in its database system, the third party API service provider 70 deducts the transaction amount from the Visa card account of a corresponding issuer, and adds the deducted amount to the GPR card account 71. Once the GPR card account 71 receives the transaction amount from the user's Visa card account, the third party API service provider 70 provides the transaction amount to the POS 50 via the payment rail 60. The above-described transaction procedures of deducting the transaction amount from the Visa card account and the GPR card account 71 can be completed within a very short time of 200 milliseconds, and the balance in the GPR card account 71 is zero when the transaction is completed to largely upgrade the use safety of the GPR card 10.

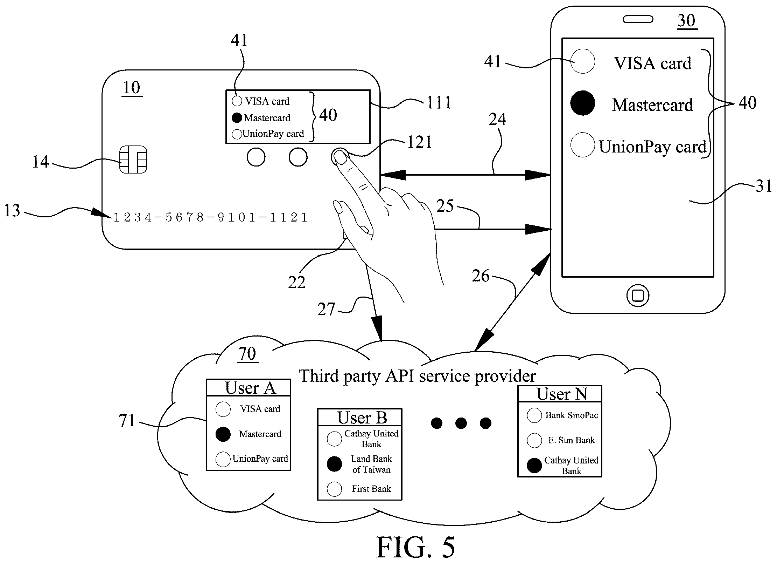

Please refer to Fig. 5. Initially, the Visa card is set by the user as the default funding choice 41. In the event the user intends to purchase a product with a discount by paying with the Mastercard, the user may operate on the color touchscreen 111 of the GPR card 10 to select the Mastercard as the funding source 40. The user may press the keys 121 to change the information of the funding sources 40 shown on the color touchscreen 111 until the Mastercard appears in the visible area of the color touchscreen 111. Then, the user touches the color touchscreen 111 or presses the keys 121 to select and set the Mastercard as the default funding choice 41.

In an operable embodiment of the present invention, once the user selects the Mastercard as the funding source 40, the GPR card 10 transmits the newly selected default funding choice 41 to the smart device 30 via the first link 24 of the BLE Bluetooth antenna 20 or the second link 25 of the LTE SIM card 22. On receipt of the new default funding choice 41, the App 31 on the smart device 30 transmits the default funding choice 41 to the third party API service provider 70 via the cellular network of the smart device 30 or a WiFi hotspot. In another operable embodiment, the default funding choice 41 can also be directly transmitted to the third party API service provider 70 via the LTE SIM card 22 on the GPR card 10 through a fourth link 27.

After receiving the change of the default funding choice 41 and the unique card number 13 from the GPR card 10 or the smart device 30, the third party API service provider 70 searches in the database system for the GPR card account 71 corresponding to the unique card number 13 and changes the original default funding choice 41, i.e. the Visa card, in the GPR card account 71 to the Mastercard that matches the newly set default funding choice 41.

When the user uses one of the above-mentioned three ways to check out at the POS 50 after the funding source 40 has been changed from the Visa card to the Mastercard, the POS 50 similarly communicates with the third party API service provider 70 via the payment rail 60 to look for the funding source 40. Based on the default funding choice 41 that has been changed to the Mastercard, the third party API service provider 70 deducts the transaction amount from the Mastercard account of a corresponding card issuer 80 and adds the deducted amount to the GPR card account 71.

Once the GPR card account 71 receives the transaction amount from the user's Mastercard account, the third party API service provider 70 provides the transaction amount to the POS 50 via the payment rail 60. The above transaction procedure is also completed within a very short time of 200 milliseconds.

In addition, when the user intends to make a transaction using a virtual terminal on the web, a virtual GPR card of the GPR card 10 of the present invention may also be used on the Internet to initiate a transaction. When the user proceeds to an online shopping site and has his/her cart full of the items he/she needs, the user will then check out. The shopping site will display a page, requesting the user to enter the unique card number 13 of the user's GPR card 10.

At this point, the user may operate on the GPR card 10 to select a desired funding source 40 via the keys 121 or the color touchscreen 111. For example, the user may select the China UnionPay card as the default funding choice 41. Based on a notice from the GPR card 10, the third party API service provider 70 will similarly set the China UnionPay card as a default digital data and may be linked to the China UnionPay that corresponds to the default digital data while transmits a deduction request for the payment of the transaction amount.

Then, the user enters the unique card number 13 at the online shopping site, and the shopping site provides the unique card number 13 and the transaction amount to the third party API service provider 70 via the payment rail 60. The third party API service provider 70 then deducts the transaction amount from the UnionPay card account and adds the deducted amount to the GPR card account 71, so that the shopping site can receive the transaction amount from the third party API service provider 70 via the payment rail 60.

From the above description, it can be seen the GPR card 10 of the present invention allows the user to make a selection directly on the GPR card 10 and to indirectly provide the default funding choice 41 to the third party API service provider 70 by linking to the App 31 installed on the smart device 30. Thereafter, the third party API service provider 70 sets a digital data matching the default funding choice 41 as a default digital data and may be linked to the issuer 80 corresponding to the default digital data to transmit the deduction request for the payment of the transaction amount.

In this manner, the BIN or the Issuer ID number and/or the account identifier directs any POS terminal or Internet virtual terminal to look for the funding source 40 for the GPR card account 71 at the third party API service provider 70 during any POS, virtual terminal or virtual POS transaction. Further, the default funding choice 41 in the GPR card account 71 may be changed at any time by the user.

The present invention has been described with some preferred embodiments thereof and it is understood that many changes and modifications in the described embodiments can be carried out without departing from the scope and the spirit of the invention that is intended to be limited only by the appended claims.

## Claims

1. A general purpose reloadable (GPR) card consolidating multiple transaction cards and having a unique card number, comprising:
at least one transmission unit being connectable to a smart device to access a plurality of funding sources stored on the smart device; and each of the funding sources being a digital data of one of many different transaction cards input to the smart device by a user;
a storage unit storing the plurality of funding sources thereon;
a display being provided on a surface of the GPR card for showing the funding sources;
an operation interface being provided on a surface of the GPR card for a user to select one of the funding sources shown on the display;
a plurality of payment units being capable of transmitting the unique card number to a point of service (POS);
a rechargeable battery; and
a microprocessor being electrically connected to between the at least one transmission unit, the storage unit, the payment units, the display, the operation interface and the rechargeable battery;
wherein the funding source selected by the user is set as a default funding choice, which is provided to a third party Application Programming Interface (API) service provider; and the third party API service provider holds a plurality of digital data of the user's preloaded transaction cards.

2. The GPR card as claimed in claim 1, wherein the user is allowed to make a selection directly on the GPR card and to indirectly provide the default funding choice to the third party API service provider by linking to an App installed on the smart device.

3. The GPR card as claimed in claim 1, wherein the third party API service provider sets the digital data matching the default funding choice as a default digital data and may be linked to an issuer corresponding to the default digital data to transmit a deduction request for the payment of a transaction amount.

4. The GPR card as claimed in claim 1, wherein the at least one transmission unit includes a BLE wireless Bluetooth antenna, an NFC antenna for an EMV chip and/or an LTE SIM card.

5. The GPR card as claimed in claim 1, wherein the plurality of payment units include a magnetic stripe, an EMV chip and an LTE SIM card.

6. The GPR card as claimed in claim 1, wherein the display and the operation interface together constitute a touchscreen for the user to make the selection directly on the touchscreen.
